# EUROPEAN PATENT APPLICATION

(11) **EP 4 790 959 A1**
(43) Date of publication of application: **12.08.2026**
(21) Application number: 24878751.7
(22) Date of filing: 11.09.2024
(51) Int. Cl.: H04L 41/16

(54) **COMMUNICATION METHOD AND DEVICE**

(30) Priority: 17.10.2023 CN 202311345769
(71) Applicant: HUAWEI TECHNOLOGIES CO., LTD., Shenzhen 518129 (CN)
(72) Inventor: GENG, Tingting, Shenzhen, Guangdong 518129 (CN); ZENG, Yu, Shenzhen, Guangdong 518129 (CN)
(74) Representative: Körber, Martin Hans
(86) International application number: PCT/CN2024/118198
(87) International publication number: WO 2025/082102

(57) **Abstract**

A communication method and apparatus are provided. The method includes: A first apparatus receives first indication information and first information. The first indication information indicates to activate a first functional module. The first information is used to determine that a to-be-activated target AI model includes N AI models, each of the N AI models is used to implement a function of the first functional module, and N is a positive integer. The first apparatus may activate the N AI models based on the first information. According to the method, the first apparatus may select the N appropriate AI models based on the first information to implement the function of the first functional module, thereby improving performance of implementing the function of the first functional module.

## Description

### CROSS-REFERENCE TO RELATED APPLICATIONS

This application claims priority to Chinese Patent Application No. 202311345769.2, filed with the China National Intellectual Property Administration on October 17, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Artificial intelligence (artificial intelligence, AI) is a technology that simulates the human brain to perform sophisticated computations. With improvement of data storage and computing capabilities, the AI technology is increasingly applied. The 3rd generation partnership project (3rd generation partnership project, 3GPP) proposes to apply AI to new radio (new radio, NR) communication systems to enhance network performance and user experience through intelligent collection and data analysis.

Currently, for a given functional module, there may be a plurality of AI models in a terminal to implement its functions. How to select an appropriate AI model to implement the functions of that functional module needs further study.

### SUMMARY

This application provides a communication method and apparatus, to select an appropriate AI model to implement functions of a functional module.

According to a first aspect, an embodiment of this application provides a communication method. The method may be applied to a first apparatus. For example, the first apparatus may be a terminal or a module (for example, a circuit, a chip, a chip system, or a processor) in a terminal, or may be a logical node, a logical module, or software that can implement all or some functions of a terminal. The method may include: The first apparatus receives first indication information and first information. The first indication information may indicate to activate a first functional module. The first information is used to determine that a to-be-activated target AI model includes N AI models, each of the N AI models is used to implement a function of the first functional module, and N is a positive integer. Then, the first apparatus may activate the N AI models based on the first information.

According to the method, the first apparatus may select the N appropriate AI models based on the first information to implement the function of the first functional module, thereby improving performance of implementing the function of the first functional module.

In some possible designs, the first information indicates at least one of the following: an input parameter of the target AI model; an output parameter of the target AI model; a version number corresponding to the target AI model; a format of the target AI model; a requirement of the target AI model on a terminal capability; a device vendor of a device to which the target AI model is applicable; an application scenario of the target AI model; a requirement on computational complexity of the target AI model; a requirement on a processing capability of the target AI model; a requirement on performance of the target AI model; a range of a size of the target AI model; or whether combining output results of a plurality of target AI models is allowed. The first information indicates a condition that the target AI model should satisfy. In this way, the first apparatus can quickly and accurately determine the to-be-activated target AI model based on the first information.

In some possible designs, the first apparatus may further determine an available resource of the first apparatus. The available resource and the first information may be used to determine that the target AI model includes the N AI models. According to this design, the first apparatus may determine, based on the available resource of the first apparatus and the first information, that the to-be-activated target AI model includes the N AI models, so that the function of the first functional module can be implemented by selecting the N AI models that adapt to the available resource of the first apparatus, thereby improving performance of implementing the function of the first functional module.

In some possible designs, the available resource includes at least one of the following: an available computing capability of the first apparatus; available power of the first apparatus; or available storage space of the first apparatus. The designs provide a plurality of possible forms of the available resource, and the first apparatus may flexibly determine the to-be-activated target AI model based on the plurality of possible forms of the available resource.

In some possible designs, the first apparatus may further determine second information, where the second information and the first information are used to determine that the target AI model includes the N AI models. The second information indicates at least one of the following of M AI models: reliability, accuracy, complexity, power consumption, a type of input information, a size of input information, a type of output information, or a size of output information, where M is a positive integer greater than or equal to N, and the M AI models are AI models that are included in the first apparatus and that are capable of implementing the function of the first functional module. The second information indicates statuses of the M AI models. In this way, the first apparatus may select, based on the statuses of the M AI models and the first information, the N appropriate AI models to implement the function of the first functional module, thereby improving performance of implementing the function of the first functional module.

In some possible designs, the first apparatus may send a first output result, where the first output result is an output result of a subset of the N AI models, the subset of the AI models is an AI model that satisfies a first condition among the N AI models, and N is greater than or equal to 2. According to the designs, the first apparatus may activate a plurality of AI models corresponding to the first functional module, and the first output result sent by the first apparatus is an output result of an AI model that satisfies the first condition in the plurality of AI models, so that accuracy and/or reliability of the first output result can be improved.

In some possible designs, the first condition includes at least one of the following: the subset of the AI models is an AI model with highest reliability among the N AI models; the subset of the AI models is an AI model with highest accuracy among the N AI models; or the subset of the AI models is an AI model whose output result is most similar to a previous measurement result of the first apparatus among the N AI models. According to the designs, the first apparatus may quickly and accurately determine the AI model corresponding to the first output result.

In some possible designs, the first apparatus may send a second output result, where the second output result is related to output results of the N AI models, where N is greater than or equal to 2. According to the designs, the first apparatus may activate a plurality of AI models corresponding to the first functional module, and the second output result sent by the first apparatus is related to output results of the plurality of AI models, so that accuracy and/or reliability of the second output result can be improved.

In some possible designs, the second output result is a weighted sum of the output results of the N AI models. According to the designs, complexity of obtaining the first output result can be reduced.

According to a second aspect, an embodiment of this application provides a communication method. The method may be applied to a second apparatus. For example, the second apparatus may alternatively be an access network device or another device that can manage life cycle management (life cycle management, LCM), or may be a module, for example, a circuit, a chip, a chip system, or a processor, that is used in an access network device or another device that can manage LCM, or may be a logical node, a logical module, or software that can implement all or some functions of an access network device or another device that can manage LCM. The method may include: The second apparatus sends first indication information and first information. The first indication information indicates to activate a first functional module. The first information may be used to determine that a to-be-activated target AI model includes N AI models, the first information is used to activate the N AI models, each of the N AI models is used to implement a function of the first functional module, and N is a positive integer.

In some possible designs, the first information indicates at least one of the following: an input parameter of the target AI model; an output parameter of the target AI model; a version number corresponding to the target AI model; a format of the target AI model; a requirement of the target AI model on a terminal capability; a device vendor of a device to which the target AI model is applicable; an application scenario of the target AI model; a requirement on computational complexity of the target AI model; a requirement on a processing capability of the target AI model; a requirement on performance of the target AI model; a range of a size of the target AI model; or whether combining output results of a plurality of target AI models is allowed.

In some possible designs, the second apparatus may receive a first output result, where the first output result is an output result of a subset of the N AI models, the subset of the AI models is an AI model that satisfies a first condition among the N AI models, and N is greater than or equal to 2.

In some possible designs, the first condition includes at least one of the following: the subset of the AI models is an AI model with highest reliability among the N AI models; the subset of the AI models is an AI model with highest accuracy among the N AI models; or the subset of the AI models is an AI model whose output result is most similar to a previous measurement result of the first apparatus among the N AI models.

In some possible designs, the second apparatus may receive a second output result, where the second output result is related to output results of the N AI models, where N is greater than or equal to 2.

In some possible designs, the second output result is a weighted sum of the output results of the N AI models.

According to a third aspect, this application provides a communication apparatus. The communication apparatus may be a terminal or a module (for example, a circuit, a chip, a chip system, or a processor) in a terminal, or may be a logical node, a logical module, or software that can implement all or some functions of a terminal. The communication apparatus has a function of implementing the first aspect. For example, the communication apparatus includes a corresponding module, unit, or means for performing the operations in the first aspect. The module, the unit, or the means may be implemented by software, may be implemented by hardware, or may be implemented by hardware executing corresponding software.

In a possible design, the communication apparatus includes a processing unit and an interface unit. The interface unit may be configured to send and receive signals, to implement communication between the communication apparatus and another apparatus. The processing unit may be configured to perform some internal operations of the communication apparatus. Functions performed by the processing unit and the interface unit may correspond to the operations in the first aspect.

In a possible design, the communication apparatus includes a processor, and the processor may be configured to be coupled to a memory. The memory may store a computer program or instructions necessary for implementing functions in the first aspect. The processor may execute the computer program or the instructions stored in the memory. When the computer program or the instructions are executed, the communication apparatus is caused to implement the method in any possible design of the first aspect.

In a possible design, the communication apparatus includes a processor and a memory. The memory may store a computer program or instructions necessary for implementing functions in the first aspect. The processor may execute the computer program or the instructions stored in the memory. When the computer program or the instructions are executed, the communication apparatus is caused to implement the method in any possible design of the first aspect.

In a possible design, the communication apparatus includes a processor and an interface circuit. The processor is configured to communicate with another apparatus through the interface circuit, and perform the method in any possible design of the first aspect.

According to a fourth aspect, this application provides a communication apparatus. The communication apparatus may be an access network device or a module (for example, a circuit, a chip, a chip system, or a processor) in an access network device, or may be a logical node, a logical module, or software that can implement all or some functions of an access network device. The communication apparatus has a function of implementing the second aspect. For example, the communication apparatus includes a corresponding module, unit, or means for performing the operations in the second aspect. The module, the unit, or the means may be implemented by software, may be implemented by hardware, or may be implemented by hardware executing corresponding software.

In a possible design, the communication apparatus includes a processing unit and an interface unit. The interface unit may be configured to send and receive signals, to implement communication between the communication apparatus and another apparatus. The processing unit may be configured to perform some internal operations of the communication apparatus. Functions performed by the processing unit and the interface unit may correspond to the operations in the second aspect.

In a possible design, the communication apparatus includes a processor, and the processor may be configured to be coupled to a memory. The memory may store a computer program or instructions necessary for implementing functions in the second aspect. The processor may execute the computer program or the instructions stored in the memory. When the computer program or the instructions are executed, the communication apparatus is caused to implement the method in any possible design of the second aspect.

In a possible design, the communication apparatus includes a processor and a memory. The memory may store a computer program or instructions necessary for implementing functions in the second aspect. The processor may execute the computer program or the instructions stored in the memory. When the computer program or the instructions are executed, the communication apparatus is caused to implement the method in any possible design of the second aspect.

In a possible design, the communication apparatus includes a processor and an interface circuit. The processor is configured to communicate with another apparatus through the interface circuit, and perform the method in any possible design of the second aspect.

It may be understood that in the third aspect or the fourth aspect, the processor may be implemented by hardware or may be implemented by software. When the processor is implemented by hardware, the processor may be a logic circuit, an integrated circuit, or the like. When the processor is implemented by software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a fifth aspect, this application provides a communication system. The communication system may include the communication apparatus according to the third aspect and the communication apparatus according to the fourth aspect. For example, the communication system includes a terminal and an access network device. The terminal is configured to perform the communication method according to the first aspect, and the access network device is configured to perform the communication method according to the second aspect.

According to a sixth aspect, this application provides a computer-readable storage medium. The computer storage medium stores a computer program or instructions, and when the computer program or the instructions are executed, the method in any one of possible designs of any one of the first aspect and the second aspect is implemented.

According to a seventh aspect, this application provides a computer program product. The computer program product includes computer program code, and when the computer program code is run, the method in any one of possible designs of any one of the first aspect and the second aspect is implemented.

According to an eighth aspect, this application provides a chip. The chip is configured to read a computer program stored in a memory, to perform the method in any one of possible designs of any one of the first aspect and the second aspect.

For technical effect that can be achieved in any one of the second aspect to the eighth aspect, refer to the descriptions of the technical effect that can be achieved in any possible design of the first aspect. Repeated parts are not described.

### BRIEF DESCRIPTION OF DRAWINGS

FIG. 1 is a diagram of an architecture of a communication system according to an embodiment of this application;
FIG. 2 is a diagram of an architecture of another communication system according to an embodiment of this application;
FIG. 3 is a flowchart of a communication method according to an embodiment of this application;
FIG. 4 is a diagram of a structure of a communication apparatus according to an embodiment of this application; and
FIG. 5 is a diagram of a structure of another communication apparatus according to an embodiment of this application.

### DESCRIPTION OF EMBODIMENTS

The following describes the technical solutions in embodiments of this application with reference to the accompanying drawings in embodiments of this application. The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system (for example, a long term evolution (long term evolution, LTE) system), a 5th generation (5th generation, 5G) mobile communication system (for example, an NR system), and a future evolved communication system (6th generation (6th generation, 6G) mobile communication system).

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

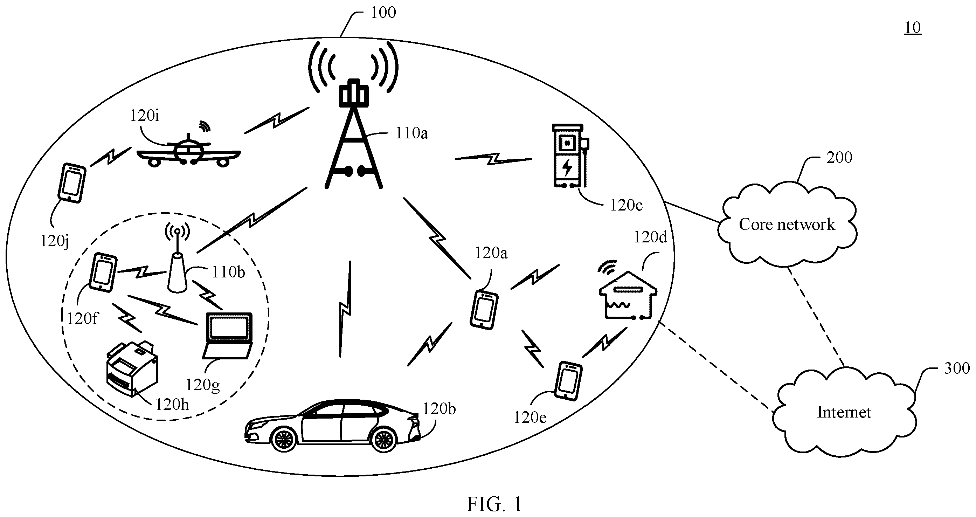

For ease of understanding embodiments of this application, FIG. 1 is a diagram of a possible and nonlimiting system. As shown in FIG. 1, a communication system 10 includes a radio access network (radio access network, RAN) 100 and a core network (core network, CN) 200. Optionally, the communication system 10 may further include an internet 300.

The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may respectively be different physical devices, or may be a same physical device that integrates a logical function of the core network and a logical function of the radio access network.

The RAN 100 may be a 3GPP-related cellular system, for example, a 4G or 5G mobile communication system, or a future-oriented evolved system (for example, a 6G mobile communication system). The RAN 100 may alternatively be an open access network (open RAN, O-RAN or ORAN), a cloud radio access network (cloud radio access network, CRAN), or a Wi-Fi system. The RAN 100 may alternatively be a communication system that integrates two or more of the foregoing systems.

The RAN node 110 may also be sometimes referred to as a RAN entity, an access node, or the like, and forms a subset of the communication system, to help a terminal implement radio access. A plurality of RAN nodes 110 in the communication system 10 may be nodes of a same type, or may be nodes of different types. In some scenarios, roles of the RAN node 110 and the terminal 120 are relative. For example, the network element 120i in FIG. 1 may be a helicopter or an uncrewed aerial vehicle, and may be configured as a mobile base station. For the terminal 120j that accesses the RAN 100 via the network element 120i, the network element 120i is a base station. However, for the base station 110a, the network element 120i is a terminal. The RAN node 110 and the terminal 120 are sometimes referred to as communication apparatuses. For example, network elements 110a and 110b in FIG. 1 may be understood as communication apparatuses having a base station function, and the network elements 120a to 120j may be understood as communication apparatuses having a terminal function.

The RAN node may also have different expressions, for example, an access network device. In this application, unless otherwise specified, the access network device is used for expression.

In a possible scenario, the access network device may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The access network device may be a macro base station (for example, 110a in FIG. 1), a micro base station or an indoor station (for example, 110b in FIG. 1), a relay node or a donor node, or a radio controller in a CRAN scenario. Optionally, the access network device may alternatively be a server, a wearable device, a vehicle, a vehicle-mounted device, or the like. For example, an access network device in a vehicle to everything (vehicle to everything, V2X) technology may be a road side unit (road side unit, RSU). All or the subset of functions of the access network device in this application may alternatively be implemented by using a software function running on hardware, or may be implemented by using an instantiated virtualization function on a platform (for example, a cloud platform). The access network device in this application may alternatively be a logical node, a logical module, or software that can implement all or the subset of the functions of the access network device.

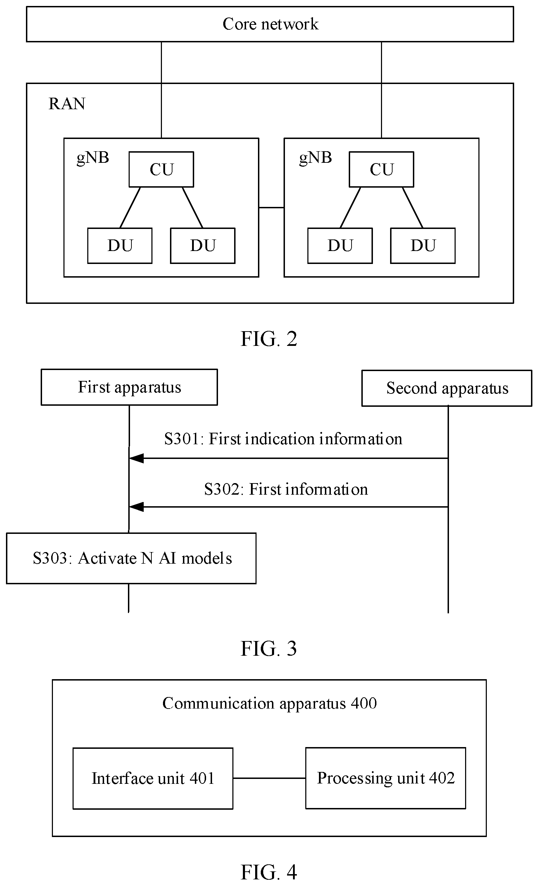

In another possible scenario, as shown in FIG. 2, a plurality of access network devices cooperate to assist a terminal in implementing radio access, and different access network devices separately implement some functions of a base station. For example, the access network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, a CU (or a CU-CP and a CU-UP), a DU, or an RU may also have different names, but a person skilled in the art may understand meanings thereof. For example, in an ORAN system, the CU may also be referred to as an open CU (open CU, O-CU), the DU may also be referred to as an open DU (open DU, O-DU), the CU-CP may also be referred to as an open CU-CP (open CU-CP, O-CU-CP), the CU-UP may also be referred to as an open CU-UP (open CU-UP, O-CU-UP), and the RU may also be referred to as an open RU (open RU, O-RU). Any one of the CU (or the CU-CP or the CU-UP), the DU, and the RU in this application may be implemented by using a software module, a hardware module, or a combination of a software module and a hardware module.

The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, autonomous driving, telemedicine, smart grid, smart furniture, smart office, smart wearable, smart transportation, and smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

In the following descriptions of this application, "sending information to a device (for example, a terminal)" may be understood as that a destination end of the information is the device, and may include directly or indirectly sending the information to the device. "Receiving information from a device (for example, a terminal)" or "receiving information that is from a device (for example, a terminal)" may be understood as that a source end of the information is the device, and may include directly or indirectly receiving the information from the device. Information may undergo necessary processing between the source end for sending the information and the destination end, for example, a format change. However, the destination end may understand valid information from the source end. Similar descriptions in this application may be understood similarly. Details are not described herein again.

A communication system and a service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and emergence of new service scenarios, the technical solutions provided in embodiments of this application are also applicable to similar technical problems.

The following first explains and describes related terms in embodiments of this application. It should be noted that these explanations are intended to make embodiments of this application easier to understand, but should not be considered as a limitation on the protection scope claimed in this application.

### (1) AI application scenarios (use case)

The AI application scenarios include but are not limited to at least one of the following: energy saving (energy saving), load balancing (load balancing), mobility optimization (mobility optimization), channel status information-reference signal (channel status information-reference signal, CSI-RS) feedback enhancement (CSI-RS feedback enhancement), beam management enhancement (beam management enhancement), or positioning accuracy enhancement (positioning accuracy enhancement). Descriptions are separately provided below.

### (1) Energy saving

An access network device may predict a load of the access network device based on loads, energy consumption, and energy efficiency of the access network device and a neighboring cell, a trajectory and a measurement result of a terminal, and the like. The access network device may take energy saving measures in a timely and suitable manner based on a prediction result without compromising network coverage and user access. The energy saving measures may include at least one of the following: cell deactivation, carrier shutdown, channel shutdown, slot shutdown, transmit power decrease, and the like.

### (2) Load balancing

An access network device may predict a load of the access network device based on loads, energy consumption, and energy efficiency of the access network device and a neighboring cell, a trajectory and a measurement result of a terminal, and the like. The access network device may hand over, based on a prediction result, some terminals to the neighboring cell or hand over some terminals served by the neighboring cell to a local cell, so that loads of access network devices in a network become more balanced. This prevents some access network devices from being overloaded, thereby affecting services of the terminals, while resources of other access network devices remain underutilized.

### (3) Mobility optimization

An access network device may predict a future trajectory of a terminal based on historical trajectory information of the terminal and measurement information of the terminal. The access network device may determine, in advance based on a prediction result, whether the terminal needs to be handed over, configure, in advance, information required for handover for the terminal that needs to be handed over, and notify a target cell to prepare an access resource for the terminal, so that a delay of the terminal during handover can be reduced, and a handover success rate of the terminal can be improved.

### (4) CSI-RS feedback enhancement

An access network device may provide a terminal with an encoder and a quantization tool based on information such as a capability of the terminal. After compressing and quantizing a CSI-RS based on the encoder and the quantization tool, the terminal may send the CSI-RS to the access network device. The access network device may determine channel quality of the terminal based on the CSI-RS.

### (5) Beam management enhancement

An access network device may obtain full-beam sweeping results from a plurality of terminals, and train a sparse sweeping matrix based on the full-beam sweeping results. Then, after sending the sparse sweeping matrix to a terminal a, the access network device may obtain a sparse sweeping result from the terminal a, and determine an optimal CSI-RS beam of the terminal a based on the sparse sweeping result.

### (6) Positioning accuracy enhancement

The positioning accuracy enhancement is used to improve positioning accuracy. The positioning accuracy enhancement may include at least one of the following: positioning accuracy enhancement based on an access network device, positioning accuracy enhancement based on a location management function network element, and positioning accuracy enhancement based on a terminal.

### (2) AI model

The AI model may represent a mapping relationship between an input and an output of the model. The AI model may be a neural network, a linear regression model, a decision tree model, a support vector machine (support vector machine, SVM), a Bayesian network, a Q-learning model, another machine learning model, or the like.

The AI model may be used to implement an AI function, and the AI function may be a function of a functional module. For example, the AI function may include at least one of the following: data collection (collection of training data and/or inference data), data preprocessing, model training (or referred to as model learning), model information release (configuration of model information), model verification, model inference, or inference result release. Inference may also be referred to as prediction.

When the AI model is located on a terminal side, for a functional module, a plurality of AI models in the terminal may implement a function of the functional module. For example, for a CSI channel measurement result prediction function, a plurality of AI models in the terminal may provide prediction results.

### (3) LCM in an AI model application process

In the AI model application process, due to factors such as mobility of a terminal, a change of a user service, and a change of a hardware resource, the terminal may need to replace a used AI model, that is, LCM needs to be performed on the AI model, so that performance of the terminal can be optimized. The LCM process may include at least one of the following operations: an activation operation, a deactivation operation, a switching operation, an updating operation, a transmission operation, a rollback operation, or the like performed on the AI model and/or a functional module.

LCM is usually based on the functional module (functionality-based). Specifically, an access network device indicates that the terminal needs to perform LCM on a functional module, and the terminal may autonomously select an AI model that implements a function of the functional module, and perform LCM on the AI model. For example, the access network device indicates that the terminal needs to activate a CSI channel measurement result prediction function, and the terminal may select an AI model that implements a CSI channel prediction function, and activate the AI model.

Currently, for a functional module, there may be a plurality of AI models in a terminal to implement a function of the functional module. How the terminal selects an appropriate AI model to implement the function of the functional module needs to be further studied. In addition, the terminal usually selects only one AI model to implement the function of the functional module. When the AI model is used to implement the function of the functional module, accuracy is low.

In view of this, embodiments of this application provide a communication method. FIG. 3 is a schematic flowchart corresponding to a communication method according to an embodiment of this application. In FIG. 3, the method is illustrated by using an example in which a first apparatus and a second apparatus are used as execution bodies of interaction illustration. However, the execution bodies of the interaction illustration are not limited in this application. For example, the first apparatus may be a terminal, or may be a module, for example, a circuit, a chip, a chip system, or a processor, that is used in a terminal, or may be a logical node, a logical module, or software that can implement all or some functions of a terminal. The second apparatus may also be an access network device or another device (for example, an operation administration and maintenance (operation administration and maintenance, OAM) device or a core network device) that can manage LCM, or may be a module, for example, a circuit, a chip, a chip system, or a processor, that is used in an access network device or another device that can manage LCM, or may be a logical node, a logical module, or software that can implement all or some functions of an access network device or another device that can manage LCM. For another example, the first apparatus may be an access network device, or may be a module, for example, a circuit, a chip, a chip system, or a processor, that is used in an access network device, or may be a logical node, a logical module, or software that can implement all or some functions of an access network device. The second apparatus may be a terminal, or may be a module, for example, a circuit, a chip, a chip system, or a processor, that is used in a terminal, or may be a logical node, a logical module, or software that can implement all or some functions of a terminal. As shown in FIG. 3, the method includes the following steps.

**S301:** The second apparatus sends first indication information; and correspondingly, the first apparatus receives the first indication information. The first indication information may indicate to activate a first functional module.

In some possible manners, when the second apparatus determines to activate a function corresponding to the first functional module on the first apparatus side, the second apparatus may determine to activate the first functional module on the first apparatus side, and send the first indication information to the first apparatus. Specific content of determining, by the second apparatus, to activate the function corresponding to the first functional module on the first apparatus side is not limited in this application. It should be understood that there may be one or more functional modules that the second apparatus determines to activate. In this application, an example in which the functional module that the second apparatus determines to activate is the first functional module is used for description.

The first indication information may indicate, in a plurality of manners, to activate the first functional module. In some examples, the first indication information includes an identity (identity, ID) of the first functional module. In this way, after receiving the first indication information, the first apparatus may determine to activate the first functional module. In some other examples, the first indication information includes indication information of the function corresponding to the first functional module. In this way, after receiving the first indication information, the first apparatus may determine to activate the first functional module. For example, the first indication information includes indication information of a CSI measurement result compression function. After receiving the first indication information, the first apparatus may determine that the first functional module is the functional module corresponding to the CSI measurement result compression function, and determine to activate the first functional module. For another example, the first indication information includes indication information of a beam prediction function. In this way, after receiving the first indication information, the first apparatus may determine that the first functional module is a functional module corresponding to the beam prediction function, and determine to activate the first functional module.

The first indication information may be carried in a conventional message, or may be carried in a new message. This is not limited in this application.

**S302:** The second apparatus sends first information; and correspondingly, the first apparatus receives the first information.

The first information may be used to determine that a to-be-activated target AI model includes N AI models, each of the N AI models is capable of implementing the function of the first functional module, and N is a positive integer. In other words, the first apparatus may determine, based on the first information, that the to-be-activated target AI model includes the N AI models. Specific content of determining is described in S303, and content of the first information is also described in S303. Details are not described herein. The first information may be carried in a conventional message, or may be carried in a new message. The first information and the first indication information may be carried in a same message, or may be carried in different messages. In addition, an execution sequence of S301 and S302 is not limited in this application.

**S303:** The first apparatus activates the N AI models based on the first information.

Optionally, S303 includes step A1 and step A2.

**Step A1:** The first apparatus determines, based on the first information, that the to-be-activated target AI model includes the N AI models.

For example, the first information indicates at least one of the following 1 to 12: 1: an input parameter of the target AI model; 2: an output parameter of the target AI model; 3: a version number corresponding to the target AI model; 4: a format of the target AI model; 5: a requirement of the target AI model on a capability of the first apparatus; 6: a device vendor of a device to which the target AI model is applicable; 7: an application scenario of the target AI model; 8: a requirement on computational complexity of the target AI model; 9: a requirement on a processing capability of the target AI model; 10: a requirement on performance of the target AI model; 11: a range of a size of the target AI model; or 12: whether combining output results of a plurality of target AI models is allowed. The point 1 to the point 12 are conditions that the target AI model should satisfy. In other words, the first information may indicate the conditions that the target AI model should satisfy. In this way, the first apparatus can quickly and accurately determine the to-be-activated target AI model based on the first information.

With reference to the content of the first information, the following describes, by using an example in which the first apparatus includes M AI models that are capable of implementing the function of the first functional module, a manner in which the first apparatus determines, based on the first information, that the to-be-activated target AI model includes the N AI models, where M is a positive integer greater than or equal to N.

Example 1: The first information indicates the input parameter of the target AI model; and the target AI model includes an AI model whose input parameter includes the input parameter indicated by the first information in the M AI models. For example, the first information indicates that the input parameter of the target AI model is an input parameter 1. The M AI models are an AI model 1 to an AI model 3. An input parameter of the AI model 1 includes the input parameter 1, an input parameter of the AI model 2 includes the input parameter 1 and an input parameter 2, and an input parameter of the AI model 3 includes the input parameter 2. In this case, the first apparatus may determine that the target AI model includes the AI model 1 and the AI model 2, that is, the N AI models include the AI model 1 and the AI model 2.

Example 2: The first information indicates the output parameter of the target AI model; and the target AI model includes an AI model whose output parameter includes the output parameter indicated by the first information in the M AI models. For example, the first information indicates that the output parameter of the target AI model is an output parameter 1. The M AI models are an AI model 1 to an AI model 3. An output parameter of the AI model 1 includes the output parameter 1, an output parameter of the AI model 2 includes the output parameter 1 and an output parameter 2, and an output parameter of the AI model 3 includes the output parameter 2. In this case, the first apparatus may determine that the target AI model includes the AI model 1 and the AI model 2, that is, the N AI models include the AI model 1 and the AI model 2.

Example 3: The first information indicates the version number of the target AI model; and the target AI model includes an AI model whose version number includes the version number indicated by the first information in the M AI models. For example, the first information indicates that the version number of the target AI model is a version number 1. The M AI models are an AI model 1 to an AI model 3. A version number of the AI model 1 and a version number of the AI model 2 each are the version number 1, and a version number of the AI model 3 is a version number 2. In this case, the first apparatus may determine that the target AI model includes the AI model 1 and the AI model 2, that is, the N AI models include the AI model 1 and the AI model 2.

Example 4: The first information indicates the format of the target AI model; and the target AI model includes an AI model whose format includes the format indicated by the first information in the M AI models. For example, the first information indicates that the format of the target AI model is a format 1. The M AI models are an AI model 1 to an AI model 3. A format of the AI model 1 and a format of the AI model 2 each are the format 1, and a format of the AI model 3 is a format 2. In this case, the first apparatus may determine that the target AI model includes the AI model 1 and the AI model 2, that is, the N AI models include the AI model 1 and the AI model 2.

Example 5: The first information indicates the requirement of the target AI model on the capability of the first apparatus; and the target model includes an AI model that satisfies the requirement indicated by the first information on the capability of the first apparatus in the M AI models. The requirement of the target AI model on the capability of the first apparatus may include at least one of the following: a requirement of the target AI model on an available computing capability of the first apparatus, a requirement of the target AI model on available storage space of the first apparatus, or a requirement of the target AI model on available power of the first apparatus.

For example, the first information indicates that the requirement of the target AI model on the available computing capability of the first apparatus is greater than or equal to 1 tera (Tera, T, namely, 1012) floating-point operations per second (floating-point operations per second, FLPS). The M AI models are an AI model 1 to an AI model 3. A requirement of the AI model 1 and a requirement of the AI model 2 on the available computing capability of the first apparatus each are greater than or equal to 1T FLPS, and a requirement of the AI model 3 on the available computing capability of the first apparatus is greater than or equal to 0.5T FLPS. In this case, the first apparatus may determine that the target AI model includes the AI model 1 and the AI model 2, that is, the N AI models include the AI model 1 and the AI model 2.

For another example, the first information indicates that the requirement of the target AI model on the available storage space of the first apparatus is greater than or equal to 50 megabytes (MB). The M AI models are an AI model 1 to an AI model 3. A requirement of the AI model 1 and a requirement of the AI model 2 on the available storage space of the first apparatus each are greater than or equal to 50 MB, and a requirement of the AI model 3 on the available storage space of the first apparatus is greater than or equal to 30 MB. In this case, the first apparatus may determine that the target AI model includes the AI model 1 and the AI model 2, that is, the N AI models include the AI model 1 and the AI model 2.

For another example, the first information indicates that the requirement of the target AI model on the available power of the first apparatus is greater than or equal to 2000 mA. The M AI models are an AI model 1 to an AI model 3. A requirement of the AI model 1 and a requirement of the AI model 2 on the available power of the first apparatus each are greater than or equal to 2000 mA, and a requirement of the AI model 3 on the available power of the first apparatus is greater than or equal to 1000 mA. In this case, the first apparatus may determine that the target AI model includes the AI model 1 and the AI model 2, that is, the N AI models include the AI model 1 and the AI model 2.

For another example, the first information indicates that the requirement of the target AI model on the available storage space of the first apparatus is greater than or equal to 50 megabytes, and the requirement of the target AI model on the available power of the first apparatus is greater than or equal to 2000 mA. The M AI models are an AI model 1 to an AI model 3. A requirement of the AI model 1 on the available storage space of the first apparatus is greater than or equal to 50 MB, and a requirement of the AI model 2 and a requirement of the AI model 3 on the available storage space of the first apparatus each are greater than or equal to 30 MB. A requirement of the AI model 1 and a requirement of the AI model 2 on the available power of the first apparatus each are greater than or equal to 2000 mA, and a requirement of the AI model 3 on the available power of the first apparatus is greater than or equal to 1000 mA. In this case, the first apparatus may determine that the target AI model includes the AI model 1, that is, the N AI models include the AI model 1.

Example 6: The first information indicates the device vendor of the device to which the target AI model is applicable; and the target AI model includes an AI model that is applicable to the device vendor indicated by the first information in the M AI models. For example, the first information indicates that the device vendors of the device to which the target AI model is applicable include a device vendor 1. The M AI models are an AI model 1 to an AI model 3. A device vendor of a device to which the AI model 1 and the AI model 2 are applicable includes the device vendor 1, and a device vendor of a device to which the AI model 3 is applicable includes a device vendor 2. In this case, the first apparatus may determine that the target AI model includes the AI model 1 and the AI model 2, that is, the N AI models include the AI model 1 and the AI model 2.

Example 7: The first information indicates the application scenario of the target AI model; and the target AI model includes an AI model that is applicable to the application scenario indicated by the first information in the M AI models. For example, the first information indicates that the application scenario of the target AI model includes an application scenario 1. The M AI models are an AI model 1 to an AI model 3. Application scenarios of the AI model 1 and the AI model 2 include the application scenario 1, and an application scenario of the AI model 3 includes an application scenario 2. In this case, the first apparatus may determine that the target AI model includes the AI model 1 and the AI model 2, that is, the N AI models include the AI model 1 and the AI model 2.

Optionally, the application scenario of the target AI model includes at least one of the following: (1) a requirement of the target AI model on hardware configurations of the first apparatus and the second apparatus, for example, a requirement of the target AI model on a quantity of receive antennas of the first apparatus and/or a quantity of transmission ports of the second apparatus; (2) a requirement of the target AI model on a channel environment, for example, the target AI model requiring that the channel environment be an urban micro (urban micro, UMi) scenario, an urban macro (urban macro, UMa) scenario, an indoor hotspot (indoor hotspot, InH) scenario, or the like; (3) a requirement of the target AI model on a network access configuration, for example, an access frequency of the target AI model; and (4) a requirement of the target AI model on a local environment of the first apparatus, for example, a requirement of the target AI model on a speed of the first apparatus.

Example 8: The first information indicates the requirement on the computational complexity of the target AI model; and the target AI model includes an AI model that satisfies the requirement on the computational complexity indicated by the first information in the M AI models. For example, the first information indicates that the computational complexity of the target AI model is lower than a computational complexity threshold. The M AI models are an AI model 1 to an AI model 3. Computational complexity of the AI model 1 and computational complexity of the AI model 2 each are lower than the computational complexity threshold, and computational complexity of the AI model 3 is higher than the computational complexity threshold. In this case, the first apparatus may determine that the target AI model includes the AI model 1 and the AI model 2, that is, the N AI models include the AI model 1 and the AI model 2.

Example 9: The first information indicates the requirement on the processing capability of the target AI model; and the target AI model includes an AI model that satisfies the requirement on the processing capability indicated by the first information in the M AI models. For example, the first information indicates that the target AI model provides an output result before first time. The M AI models are an AI model 1 to an AI model 3. The AI model 1 and the AI model 2 can provide output results before the first time, and the AI model 3 provides an output result after the first time. In this case, the first apparatus may determine that the target AI model includes the AI model 1 and the AI model 2, that is, the N AI models include the AI model 1 and the AI model 2.

Example 10: The first information indicates the requirement on the performance of the target AI model; and the target AI model includes an AI model that satisfies the requirement on the performance indicated by the first information in the M AI models. The requirement on the performance of the target AI model may include a requirement on accuracy and/or reliability of the target AI model.

For example, the first information indicates that the accuracy of the target AI model is higher than a first accuracy threshold. The M AI models are an AI model 1 to an AI model 3. Accuracy of the AI model 1 and accuracy of the AI model 2 each are higher than the first accuracy threshold, and accuracy of the AI model 3 is lower than the first accuracy threshold. In this case, the first apparatus may determine that the target AI model includes the AI model 1 and the AI model 2, that is, the N AI models include the AI model 1 and the AI model 2.

For another example, the first information indicates that the reliability of the target AI model is higher than a first reliability threshold. The M AI models are an AI model 1 to an AI model 3. Reliability of the AI model 1 and reliability of the AI model 2 each are higher than the first reliability threshold, and reliability of the AI model 3 is lower than the first reliability threshold. In this case, the first apparatus may determine that the target AI model includes the AI model 1 and the AI model 2, that is, the N AI models include the AI model 1 and the AI model 2.

For another example, the first information indicates that the accuracy of the target AI model is higher than a first accuracy threshold, and the reliability of the target AI model is higher than a first reliability threshold. The M AI models are an AI model 1 to an AI model 3. Accuracy of the AI model 1 is higher than the first accuracy threshold, and accuracy of the AI model 2 and accuracy of the AI model 3 each are lower than the first accuracy threshold. Reliability of the AI model 1 and reliability of the AI model 2 each are higher than the first reliability threshold, and reliability of the AI model 3 is lower than the first reliability threshold. In this case, the first apparatus may determine that the target AI model includes the AI model 1, that is, the N AI models include the AI model 1.

Example 11: The first information indicates the range of the size of the target AI model; and the target AI model includes an AI model that satisfies the range of the size indicated by the first information in the M AI models. For example, the first information indicates that the size of the target AI model ranges from 40 MB to 60 MB. The M AI models are an AI model 1 to an AI model 3. A size of the AI model 1 is 50 MB, a size of the AI model 2 is 80 MB, and a size of the AI model 3 is 30 MB. In this case, the first apparatus may determine that the target AI model includes the AI model 1, that is, the N AI models include the AI model 1.

Example 12: The first information indicates whether combining the output results of the plurality of target AI models is allowed. When combining the results of the plurality of target AI models is allowed, the target AI model includes one or more of the M AI models; and/or when combining the results of the plurality of target AI models is not allowed, the target AI model includes one of the M AI models. Optionally, when the first information does not indicate whether combining the output results of the plurality of target AI models is allowed, it may be considered by default that combining the output results of the plurality of target AI models is allowed, or it may be considered by default that combining the results of the plurality of target AI models is not allowed.

It should be understood that at least two of the foregoing Example 1 to Example 12 may be combined with each other. For example, Example 1 and Example 11 are combined. The first information indicates the input parameter of the target AI model and the range of the size of the target AI model; and the target AI model includes an AI model whose input parameter includes the input parameter indicated by the first information and that satisfies the range of the size indicated by the first information in the M AI models. For example, the first information indicates that the input parameter of the target AI model includes the input parameter 1, and the size of the target AI model ranges from 40 MB to 60 MB. The M AI models are an AI model 1 to an AI model 3. Input parameters of the AI model 1 and the AI model 2 include the input parameter 1, and the input parameter of the AI model 3 includes the input parameter 2. The size of the AI model 1 and the size of the AI model 3 each are 50 MB, and the size of the AI model 2 is 80 MB. In this case, the first apparatus may determine that the target AI model includes the AI model 1, that is, the N AI models include the AI model 1.

**Step A2:** The first apparatus activates the N AI models. Specific content of activating the N AI models by the first apparatus is not limited in this application.

According to the method shown in FIG. 3, the first apparatus may select the N appropriate AI models based on the first information to implement the function of the first functional module, thereby improving performance of implementing the function of the first functional module. In addition, because the first information is from the second apparatus, the second apparatus may assist the first apparatus in selecting the appropriate N AI models to implement the function of the first functional module, thereby effectively managing AI models in the first apparatus.

As described above, the first information may be used to determine that the to-be-activated target AI model includes the N AI models. Optionally, the basis for determining that the to-be-activated target AI model includes the N AI models may further include other information. The following describes this by using Manner a1 and Manner a2.

**Manner a1:** The first apparatus determines an available resource of the first apparatus, where the available resource and the first information may be used to determine that the to-be-activated target AI model includes the N AI models. In other words, the first apparatus may determine, based on the available resource of the first apparatus and the first information, that the to-be-activated target AI model includes the N AI models.

Optionally, in Manner a1, the first apparatus may determine, by using step B1 and step B2, that the to-be-activated target AI model includes the N AI models.

**Step B1:** The first apparatus may determine, based on the first information, that a candidate target AI model includes P AI models, where P is a positive integer greater than or equal to N. For specific content of step B1, refer to step A1, where only the to-be-activated target AI model is replaced with the candidate target AI model, and the N AI models are replaced with the P AI models. Details are not described herein again.

**Step B2:** The first apparatus may select the to-be-activated target AI model from the P AI models based on the available resource of the first apparatus, that is, select the N AI models.

If a quantity of available resources of the first apparatus is greater than or equal to a first available resource threshold, the first apparatus may select the to-be-activated target AI model from the P AI models in a plurality of manners, for example, in Manner b1 or Manner b2. The first available resource threshold may be preset, for example, specified in a protocol; or may be determined by the first apparatus; or may be notified to the first apparatus by another apparatus (for example, the second apparatus).

**Manner b1:** If the quantity of available resources of the first apparatus is greater than or equal to the first available resource threshold, the first apparatus may select one or more AI models with highest complexity from the P AI models as the to-be-activated target AI model. For example, the P AI models include an AI model 1 and an AI model 2. Complexity of the AI model 1 is higher than that of the AI model 2. If the quantity of available resources of the first apparatus is greater than or equal to the first available resource threshold, the first apparatus may select the AI model 1 as the to-be-activated target AI model. In this way, when the first apparatus has a large quantity of available resources, the first apparatus may select an AI model with highest complexity as the to-be-activated target AI model, thereby improving performance.

**Manner b2:** If the quantity of available resources of the first apparatus is greater than or equal to the first available resource threshold, the first apparatus may select one or more AI models whose complexity is higher than a first complexity threshold from the P AI models as the to-be-activated target AI model. For example, the P AI models include an AI model 1 and an AI model 2. Complexity of the AI model 1 is higher than the first complexity threshold, and complexity of the AI model 2 is lower than the first complexity threshold. If the quantity of available resources of the first apparatus is greater than or equal to the first available resource threshold, the first apparatus may select the AI model 1 as the to-be-activated target AI model. In this way, when the first apparatus has a large quantity of available resources, the first apparatus may select an AI model with high complexity as the to-be-activated target AI model, thereby improving performance. The first complexity threshold may be preset, for example, specified in a protocol; or may be determined by the first apparatus; or may be notified to the first apparatus by another apparatus (for example, the second apparatus).

If the quantity of available resources of the first apparatus is less than a second available resource threshold, the first apparatus may select the to-be-activated target AI model from the P AI models in a plurality of manners, for example, in Manner c1 or Manner c2. The second available resource threshold may be preset, for example, specified in a protocol; or may be determined by the first apparatus; or may be notified to the first apparatus by another apparatus (for example, the second apparatus). Optionally, the second available resource threshold is less than or equal to the first available resource threshold.

**Manner c1:** If the quantity of available resources of the first apparatus is less than the second available resource threshold, the first apparatus may select one or more AI models with lowest complexity from the P AI models as the to-be-activated target AI model. For example, the P AI models include an AI model 1 and an AI model 2. Complexity of the AI model 1 is higher than that of the AI model 2. If the quantity of available resources of the first apparatus is less than the second available resource threshold, the first apparatus may select the AI model 2 as the to-be-activated target AI model. In this way, when the first apparatus has a small quantity of available resources, the first apparatus may select an AI model with lowest complexity as the to-be-activated target AI model, thereby improving performance.

**Manner c2:** If the quantity of available resources of the first apparatus is less than the second available resource threshold, the first apparatus may select one or more AI models whose complexity is lower than a second complexity threshold from the P AI models as the to-be-activated target AI model. For example, the P AI models include an AI model 1 and an AI model 2. Complexity of the AI model 1 is higher than the second complexity threshold, and complexity of the AI model 2 is lower than the second complexity threshold. If the quantity of available resources of the first apparatus is less than the second available resource threshold, the first apparatus may select the AI model 2 as the to-be-activated target AI model. In this way, when the first apparatus has a small quantity of available resources, the first apparatus may select an AI model with low complexity as the to-be-activated target AI model, thereby saving resources of the first apparatus. The second complexity threshold may be preset, for example, specified in a protocol; or may be determined by the first apparatus; or may be notified to the first apparatus by another apparatus (for example, the second apparatus). Optionally, the second complexity threshold is less than or equal to the first complexity threshold.

Optionally, the available resource of the first apparatus includes at least one of the following: an available computing capability of the first apparatus, available power of the first apparatus, or available storage space of the first apparatus. With reference to content of the available resource of the first apparatus, the following describes a manner in which the first apparatus selects, from the P AI models based on the available resource of the first apparatus, the to-be-activated target AI model.

Example I: The available resource of the first apparatus includes the available computing capability of the first apparatus. The first available resource threshold includes a first available computing capability threshold, and the second available resource threshold includes a second available computing capability threshold. The first available computing capability threshold is greater than or equal to the second available computing capability threshold. If the available computing capability of the first apparatus is higher than or equal to the first available computing capability threshold, the first apparatus may select, from the P AI models, one or more AI models with highest complexity as the to-be-activated target AI model; or the first apparatus may select, from the P AI models, one or more AI models whose complexity is higher than the first complexity threshold as the to-be-activated target AI model; and/or if the available computing capability of the first apparatus is lower than the second available computing capability threshold, the first apparatus may select, from the P AI models, one or more AI models with lowest complexity as the to-be-activated target AI model; or the first apparatus may select, from the P AI models, one or more AI models whose complexity is lower than the second complexity threshold as the to-be-activated target AI model.

Example II: The available resource of the first apparatus includes the available power of the first apparatus. The first available resource threshold includes a first available power threshold, and the second available resource threshold includes a second available power threshold. The first available power threshold is greater than or equal to the second available power threshold. If the available power of the first apparatus is greater than or equal to the first available power threshold, the first apparatus may select, from the P AI models, one or more AI models with highest complexity as the to-be-activated target AI model; or the first apparatus may select, from the P AI models, one or more AI models whose complexity is higher than the first complexity threshold as the to-be-activated target AI model; and/or if the available power of the first apparatus is less than the second available power threshold, the first apparatus may select, from the P AI models, one or more AI models with lowest complexity as the to-be-activated target AI model; or the first apparatus may select, from the P AI models, one or more AI models whose complexity is lower than the second complexity threshold as the to-be-activated target AI model.

Example III: The available resource of the first apparatus includes the available storage space of the first apparatus. The first available resource threshold includes a first available storage space threshold, and the second available resource threshold includes a second available storage space threshold. The first available storage space threshold is greater than or equal to the second available storage space threshold. If the available storage space of the first apparatus is greater than or equal to the first available storage space threshold, the first apparatus may select, from the P AI models, one or more AI models with highest complexity as the to-be-activated target AI model; or the first apparatus may select, from the P AI models, one or more AI models whose complexity is higher than the first complexity threshold as the to-be-activated target AI model; and/or if the available storage space of the first apparatus is less than the second available storage space threshold, the first apparatus may select, from the P AI models, one or more AI models with lowest complexity as the to-be-activated target AI model; or the first apparatus may select, from the P AI models, one or more AI models whose complexity is lower than the second complexity threshold as the to-be-activated target AI model.

It should be understood that at least two of the foregoing Example I to Example III may be combined with each other. For example, Example I, Example II, and Example III are combined. The available resource of the first apparatus includes the available computing capability of the first apparatus, the available power of the first apparatus, and the available storage space of the first apparatus. The first available resource threshold includes the first available computing capability threshold, the first available power threshold, and the first available storage space threshold, and the second available resource threshold includes the second available computing capability threshold, the second available power threshold, and the second available storage space threshold. The first available computing capability threshold is greater than or equal to the second available computing capability threshold; the first available power threshold is greater than or equal to the second available power threshold; and the first available storage space threshold is greater than or equal to the second available storage space threshold. If the available computing capability of the first apparatus is higher than or equal to the first available computing capability threshold, the available power of the first apparatus is greater than or equal to the first available power threshold, and the available storage space of the first apparatus is greater than or equal to the first available storage space threshold, the first apparatus may select, from the P AI models, one or more AI models with highest complexity as the to-be-activated target AI model; or the first apparatus may select, from the P AI models, one or more AI models whose complexity is higher than the first complexity threshold as the to-be-activated target AI model; and/or if the available computing capability of the first apparatus is lower than the second available computing capability threshold, the available power of the first apparatus is less than the second available power threshold, and the available storage space of the first apparatus is less than the second available storage space threshold, the first apparatus may select, from the P AI models, one or more AI models with lowest complexity as the to-be-activated target AI model; or the first apparatus may select, from the P AI models, one or more AI models whose complexity is lower than the second complexity threshold as the to-be-activated target AI model. In other words, when the first apparatus has a high available computing capability, a large amount of available power, and a large amount of available storage space, the first apparatus may select an AI model with high complexity as the to-be-activated target AI model, so that performance can be improved. When the first apparatus has a low available computing capability, a small amount of available power, and a small amount of available storage space, the first apparatus may select an AI model with low complexity as the to-be-activated target AI model, so that resources can be saved.

In Manner a1, the first apparatus may determine, based on the available resource of the first apparatus and the first information, that the to-be-activated target AI model includes the N AI models, so that the function of the first functional module can be implemented by selecting the N AI models that adapt to the available resource of the first apparatus, thereby improving performance of implementing the function of the first functional module.

In some possible manners, Manner a1 may be replaced with the following: The first apparatus determines, based on the available resource of the first apparatus, that the to-be-activated target AI model includes the N AI models. For example, the first apparatus includes M AI models that are capable of implementing the function of the first functional module, where M is a positive integer greater than or equal to N. The first apparatus may select the to-be-activated target AI model from the M AI models based on the available resource of the first apparatus, that is, select the N AI models. For specific content, refer to step B2, where only the P AI models are replaced with the M AI models. Details are not described herein again.

**Manner a2:** The first apparatus may determine second information, where the second information and the first information are used to determine that the target AI model includes the N AI models. In other words, the first apparatus may determine, based on the second information and the first information, that the to-be-activated target AI model includes the N AI models. The second information may indicate statuses of the M AI models. The M AI models are AI models that are included in the first apparatus and that are capable of implementing the function of the first functional module, and M is a positive integer greater than or equal to N. For example, the second information may indicate at least one of the following of M AI models: reliability, accuracy, complexity, power consumption, a type of input information, a size of input information, a type of output information, or a size of output information.

Optionally, in Manner a2, the first apparatus may determine, by using step C1 and step C2, that the to-be-activated target AI model includes the N AI models.

**Step C1:** The first apparatus may determine, based on the first information, that a candidate target AI model includes P AI models, where P is a positive integer greater than or equal to N. For specific content of step C1, refer to step A1, where only the to-be-activated target AI model is replaced with the candidate target AI model, and the N AI models are replaced with the P AI models. Details are not described herein again.

Step C2: The first apparatus may select the to-be-activated target AI model from the P AI models based on the second information, that is, select the N AI models.

The following describes step C2 with reference to content of the second information.

Example a1: The second information indicates the reliability of the M AI models. In some examples, the to-be-activated target AI model may be N AI models with highest reliability in the P AI models. For example, the P AI models include an AI model 1 and an AI model 2, and reliability of the AI model 1 is higher than reliability of the AI model 2. The to-be-activated target AI model may be the AI model 1. In some other examples, the to-be-activated target AI model may be N AI models whose reliability is higher than a second reliability threshold in the P AI models. For example, the P AI models include an AI model 1 and an AI model 2, reliability of the AI model 1 is higher than the second reliability threshold, and reliability of the AI model 2 is lower than the second reliability threshold. The to-be-activated target AI model may be the AI model 1. The second reliability threshold may be preset, for example, specified in a protocol; or may be determined by the first apparatus; or may be notified to the first apparatus by another apparatus (for example, the second apparatus).

Example a2: The second information indicates the accuracy of the M AI models. In some examples, the to-be-activated target AI model may be N AI models with highest accuracy in the P AI models. For example, the P AI models include an AI model 1 and an AI model 2, and accuracy of the AI model 1 is higher than accuracy of the AI model 2. The to-be-activated target AI model may be the AI model 1. In some other examples, the to-be-activated target AI model may be N AI models whose accuracy is higher than a second accuracy threshold in the P AI models. For example, the P AI models include an AI model 1 and an AI model 2, accuracy of the AI model 1 is higher than the second accuracy threshold, and accuracy of the AI model 2 is lower than the second accuracy threshold. The to-be-activated target AI model may be the AI model 1. The second accuracy threshold may be preset, for example, specified in a protocol; or may be determined by the first apparatus; or may be notified to the first apparatus by another apparatus (for example, the second apparatus).

Example a3: The second information indicates the complexity of the M AI models. In some examples, the to-be-activated target AI model may be N AI models with lowest complexity in the P AI models. For example, the P AI models include an AI model 1 and an AI model 2, and complexity of the AI model 1 is higher than complexity of the AI model 2. The to-be-activated target AI model may be the AI model 2. In some other examples, the to-be-activated target AI model may be N AI models whose complexity is lower than a third complexity threshold in the P AI models. For example, the P AI models include an AI model 1 and an AI model 2, where complexity of the AI model 1 is higher than the third complexity threshold, and complexity of the AI model 2 is lower than the third complexity threshold. The to-be-activated target AI model may be the AI model 2. The third complexity threshold may be preset, for example, specified in a protocol; or may be determined by the first apparatus; or may be notified to the first apparatus by another apparatus (for example, the second apparatus).

Example a4: The second information indicates the power consumption of the M AI models. In some examples, the to-be-activated target AI model may be N AI models with lowest power consumption in the P AI models. For example, the P AI models include an AI model 1 and an AI model 2, and power consumption of the AI model 1 is higher than power consumption of the AI model 2. The to-be-activated target AI model may be the AI model 2. In some other examples, the to-be-activated target AI model may be N AI models whose power consumption is lower than a power consumption threshold in the P AI models. For example, the P AI models include an AI model 1 and an AI model 2, power consumption of the AI model 1 is higher than the power consumption threshold, and power consumption of the AI model 2 is lower than the power consumption threshold. The to-be-activated target AI model may be the AI model 2. The power consumption threshold may be preset, for example, specified in a protocol; or may be determined by the first apparatus; or may be notified to the first apparatus by another apparatus (for example, the second apparatus).

Example a5: The second information indicates the type of input information of the M AI models.

In some examples, the to-be-activated target AI model may be N AI models with a smallest quantity of types of input information in the P AI models. For example, the P AI models include an AI model 1 and an AI model 2, and a quantity of types of input information of the AI model 1 is greater than a quantity of types of input information of the AI model 2. The to-be-activated target AI model may be the AI model 2.

In some other examples, the to-be-activated target AI model may be N AI models whose quantity of types of input information is less than a first quantity threshold of types of input information in the P AI models. For example, the P AI models include an AI model 1 and an AI model 2. A quantity of types of input information of the AI model 1 is greater than the first quantity threshold of types of input information, and a quantity of types of input information of the AI model 2 is less than the first quantity threshold of types of input information. The to-be-activated target AI model may be the AI model 2. The first quantity threshold of types of input information may be preset, for example, specified in a protocol; or may be determined by the first apparatus; or may be notified to the first apparatus by another apparatus (for example, the second apparatus).

In some other examples, the to-be-activated target AI model may be N AI models with a largest quantity of types of input information in the P AI models. For example, the P AI models include an AI model 1 and an AI model 2, and a quantity of types of input information of the AI model 1 is greater than a quantity of types of input information of the AI model 2. The to-be-activated target AI model may be the AI model 1.

In some other examples, the to-be-activated target AI model may be N AI models whose quantity of types of input information is greater than or equal to a second quantity threshold of types of input information in the P AI models. For example, the P AI models include an AI model 1 and an AI model 2. A quantity of types of input information of the AI model 1 is greater than the second quantity threshold of types of input information, and a quantity of types of input information of the AI model 2 is less than the second quantity threshold of types of input information. The to-be-activated target AI model may be the AI model 1. The second quantity threshold of types of input information may be preset, for example, specified in a protocol; or may be determined by the first apparatus; or may be notified to the first apparatus by another apparatus (for example, the second apparatus). Optionally, the second quantity threshold of types of input information is less than or equal to the first quantity threshold of types of input information.

Example a6: The second information indicates a data amount of the input information of the M AI models.

In some examples, the to-be-activated target AI model may be N AI models with a smallest data amount of input information in the P AI models. For example, the P AI models include an AI model 1 and an AI model 2, and a data amount of input information of the AI model 1 is greater than a data amount of input information of the AI model 2. The to-be-activated target AI model may be the AI model 2.

In some other examples, the to-be-activated target AI model may be N AI models whose data amount of input information is less than a first input information data amount threshold in the P AI models. For example, the P AI models include an AI model 1 and an AI model 2. A data amount of input information of the AI model 1 is greater than the first input information data amount threshold, and a data amount of input information of the AI model 2 is less than the first input information data amount threshold. The to-be-activated target AI model may be the AI model 2. The first input information data amount threshold may be preset, for example, specified in a protocol; or may be determined by the first apparatus; or may be notified to the first apparatus by another apparatus (for example, the second apparatus).

In some other examples, the to-be-activated target AI model may be N AI models with a largest data amount of input information in the P AI models. For example, the P AI models include an AI model 1 and an AI model 2, and a data amount of input information of the AI model 1 is greater than a data amount of input information of the AI model 2. The to-be-activated target AI model may be the AI model 1.

In some other examples, the to-be-activated target AI model may be N AI models whose data amount of input information is greater than or equal to a second input information data amount threshold in the P AI models. For example, the P AI models include an AI model 1 and an AI model 2. A data amount of input information of the AI model 1 is greater than the second input information data amount threshold, and a data amount of input information of the AI model 2 is less than the second input information data amount threshold. The to-be-activated target AI model may be the AI model 1. The second input information data amount threshold may be preset, for example, specified in a protocol; or may be determined by the first apparatus; or may be notified to the first apparatus by another apparatus (for example, the second apparatus). Optionally, the second input information data amount threshold is less than or equal to the first input information data amount threshold.

Example a7: The second information indicates the type of output information of the M AI models.

In some examples, the to-be-activated target AI model may be N AI models with a smallest quantity of types of output information in the P AI models. For example, the P AI models include an AI model 1 and an AI model 2, and a quantity of types of output information of the AI model 1 is greater than a quantity of types of output information of the AI model 2. The to-be-activated target AI model may be the AI model 2.

In some other examples, the to-be-activated target AI model may be N AI models whose quantity of types of output information is less than a first quantity threshold of types of output information in the P AI models. For example, the P AI models include an AI model 1 and an AI model 2. A quantity of types of output information of the AI model 1 is greater than the first quantity threshold of types of output information, and a quantity of types of output information of the AI model 2 is less than the first quantity threshold of types of output information. The to-be-activated target AI model may be the AI model 2. The first quantity threshold of types of output information may be preset, for example, specified in a protocol; or may be determined by the first apparatus; or may be notified to the first apparatus by another apparatus (for example, the second apparatus).

In some other examples, the to-be-activated target AI model may be N AI models with a largest quantity of types of output information in the P AI models. For example, the P AI models include an AI model 1 and an AI model 2, and a quantity of types of output information of the AI model 1 is greater than a quantity of types of output information of the AI model 2. The to-be-activated target AI model may be the AI model 1.

In some other examples, the to-be-activated target AI model may be N AI models whose quantity of types of output information is greater than or equal to a second quantity threshold of types of output information in the P AI models. For example, the P AI models include an AI model 1 and an AI model 2. A quantity of types of output information of the AI model 1 is greater than the second quantity threshold of types of output information, and a quantity of types of output information of the AI model 2 is less than the second quantity threshold of types of output information. The to-be-activated target AI model may be the AI model 1. The second quantity threshold of types of output information may be preset, for example, specified in a protocol; or may be determined by the first apparatus; or may be notified to the first apparatus by another apparatus (for example, the second apparatus). Optionally, the second quantity threshold of types of output information is less than or equal to the first quantity threshold of types of output information.

Example a8: The second information indicates a data amount of the output information of the M AI models.

In some examples, the to-be-activated target AI model may be N AI models with a smallest data amount of output information in the P AI models. For example, the P AI models include an AI model 1 and an AI model 2, and a data amount of output information of the AI model 1 is greater than a data amount of output information of the AI model 2. The to-be-activated target AI model may be the AI model 2.

In some other examples, the to-be-activated target AI model may be N AI models whose data amount of output information is less than a first output information data amount threshold in the P AI models. For example, the P AI models include an AI model 1 and an AI model 2. A data amount of output information of the AI model 1 is greater than the first output information data amount threshold, and a data amount of output information of the AI model 2 is less than the first output information data amount threshold. The to-be-activated target AI model may be the AI model 2. The first output information data amount threshold may be preset, for example, specified in a protocol; or may be determined by the first apparatus; or may be notified to the first apparatus by another apparatus (for example, the second apparatus).

In some other examples, the to-be-activated target AI model may be N AI models with a largest data amount of output information in the P AI models. For example, the P AI models include an AI model 1 and an AI model 2, and a data amount of output information of the AI model 1 is greater than a data amount of output information of the AI model 2. The to-be-activated target AI model may be the AI model 1.

In some other examples, the to-be-activated target AI model may be N AI models whose data amount of output information is greater than or equal to a second output information data amount threshold in the P AI models. For example, the P AI models include an AI model 1 and an AI model 2. A data amount of output information of the AI model 1 is greater than the second output information data amount threshold, and a data amount of output information of the AI model 2 is less than the second output information data amount threshold. The to-be-activated target AI model may be the AI model 1. The second output information data amount threshold may be preset, for example, specified in a protocol; or may be determined by the first apparatus; or may be notified to the first apparatus by another apparatus (for example, the second apparatus). Optionally, the second output information data amount threshold is less than or equal to the first output information data amount threshold.

Example a8: The second information indicates a matched operator of the M AI models. The to-be-activated target AI model may be N AI models that are in the P AI models and that match a current operator of the first apparatus. For example, the P AI models include an AI model 1 and an AI model 2. An operator matched with the AI model 1 is an operator 1, and an operator matched with the AI model 2 is an operator 2. If the current operator of the first apparatus is the operator 1, the to-be-activated target AI model may be the AI model 1.

Example a9: The second information indicates the power consumption and the accuracy of the M AI models. The to-be-activated target AI model may be N AI models with a smallest function value of power consumption and accuracy in the P AI models. For example, a function value of the power consumption and the accuracy may be a weighted function value of the power consumption and the accuracy. Weights of the power consumption and the accuracy may be preconfigured, for example, specified in a protocol; or may be determined by the first apparatus; or may be notified to the first apparatus by another apparatus (for example, the second apparatus). In this way, the first apparatus may select an AI model with low running energy consumption and high accuracy as the to-be-activated target AI model, thereby improving performance.

In Manner a2, the first apparatus may determine, based on the statuses of the M AI models and the first information, that the to-be-activated target AI model includes the N AI models, so that the first apparatus can select N appropriate AI models to implement the function of the first functional module, thereby improving performance of implementing the function of the first functional module.

In some possible manners, Manner a2 may be replaced with the following: The first apparatus determines, based on the second information, that the to-be-activated target AI model includes the N AI models. For example, the first apparatus includes M AI models that are capable of implementing the function of the first functional module, where M is a positive integer greater than or equal to N. The first apparatus may select the N AI models from the M AI models based on the second information. For specific content, refer to step C2, where only the P AI models are replaced with the M AI models. Details are not described herein again.

In some possible manners, after the N AI models are activated, the first apparatus may send output results of the AI models in a plurality of manners, for example, in Manner d1, Manner d2, or Manner d3.

**Manner d1:** Here, N is 1. In other words, the first apparatus activates one AI model. The first apparatus may send an output result of the AI model. Correspondingly, the second apparatus receives the output result of the AI model. The output result of the AI model may be carried in a conventional message, or may be carried in a new message. This is not limited in this application.

**Manner d2:** Here, N is greater than or equal to 2. In other words, the first apparatus activates a plurality of AI models. The first apparatus sends a first output result. Correspondingly, the second apparatus receives the first output result. The first output result is an output result of a subset of AI models among the N AI models, and the subset of the AI models is an AI model that satisfies a first condition among the N AI models.

For example, the first condition includes at least one of the following Condition 1 to Condition 3.

**Condition 1:** The subset of the AI models is AI models with highest reliability among the N AI models. For example, the N AI models include an AI model 1 and an AI model 2. Reliability of the AI model 1 is higher than that of the AI model 2. The subset of the AI models is the AI model 1. In this way, the first output result sent by the first apparatus is an output result of the AI model 1, so that the second apparatus can obtain an output result of an AI model with high reliability.

**Condition 2:** The subset of the AI models is an AI model with highest accuracy among the N AI models. For example, the N AI models include an AI model 1 and an AI model 2. Accuracy of the AI model 1 is higher than that of the AI model 2. The subset of the AI models is the AI model 1. In this way, the first output result sent by the first apparatus is an output result of the AI model 1, so that the second apparatus can obtain an output result of an AI model with high accuracy.

**Condition 3:** The subset of the AI models is an AI model whose output result is most similar to a previous measurement result of the first apparatus among the N AI models. For example, the N AI models include an AI model 1 and an AI model 2. The previous measurement result of the first apparatus is a measurement result 1. If similarity between an output result of the AI model 1 and the measurement result 1 is higher than similarity between an output result of the AI model 2 and the measurement result 1, the subset of the AI models is the AI model 1. When similarity between an output result of an AI model and the previous measurement result is high, accuracy of the output result of the AI model is usually high. In this way, the first output result sent by the first apparatus is the output result of the AI model 1, so that the second apparatus can obtain an output result of an AI model with high accuracy.

The similarity may also be referred to as overlap. There may be a plurality of evaluation criteria for the similarity. For example, a smaller mean square error between an output result of an AI model and the previous measurement result of the first apparatus indicates higher similarity between the output result of the AI model and the previous measurement result of the first apparatus.

In Manner d2, the first apparatus may activate a plurality of AI models corresponding to the first functional module, and the first output result sent by the first apparatus is an output result of an AI model that satisfies the first condition in the plurality of AI models, so that accuracy and/or reliability of the first output result can be improved.

**Manner d3:** The first apparatus sends a second output result. Correspondingly, the second apparatus receives the second output result. The second output result is related to output results of the N AI models.

Optionally, the second output result is a weighted sum of the output results of the N AI models. For example,$output = w_ 1 * output_ 1 + w_ 2 * output_ 2 + . . . + w_N * output_N .$

Here, output is the second output result, w_i is a weight corresponding to an i^{th} AI model among the N AI models, output_i is an output result of the i^{th} AI model among the N AI models, i is an integer ranging from 1 to N. Here, w_i may be preset, for example, specified in a protocol; or may be determined by the first apparatus; or may be notified to the first apparatus by another apparatus (for example, the second apparatus).

In Manner d3, the first apparatus may activate a plurality of AI models corresponding to the first functional module, and the second output result sent by the first apparatus is related to output results of the plurality of AI models, so that accuracy and/or reliability of the second output result can be improved.

It should be understood that the method shown in FIG. 3 is described by using activation performed on an AI model and a functional module as an example. The method shown in FIG. 3 may also be applied to another operation in the LCM process, for example, may be applied to at least one of the following operations in the LCM process: a deactivation operation, a switching operation, an updating operation, a transmission operation, or a rollback operation performed on the AI model and/or the functional module. In this case, the activation in the method shown in FIG. 3 may be replaced with another operation in the LCM process.

It should be further understood that the method shown in FIG. 3 is described by using a scenario in which an AI model is included as an example. The method shown in FIG. 3 may also be applied to the following scenario: The second apparatus indicates the first apparatus to implement a first function, and the first apparatus implements the first function in a plurality of manners. In this case, activating the first functional module in the method shown in FIG. 3 may be replaced with implementing the first function, and the AI model may be replaced with a manner of implementing the first function.

Based on a same technical concept as the foregoing method embodiments, an embodiment of this application provides a corresponding communication apparatus, having a function of performing related steps in the foregoing method embodiments. The function may be implemented by hardware, may be implemented by software, or may be implemented by hardware by executing corresponding software. The hardware or the software includes one or more modules corresponding to the function. The communication apparatus may be a terminal, or may be a module (for example, a circuit or a chip) in a terminal, or may be a logical node, a logical module, or software that can implement all or some functions of a terminal or an access network device. Alternatively, the communication apparatus may be an access network device or a module (for example, a circuit or a chip) in an access network device, or may be a logical node, a logical module, or software that can implement all or some functions of an access network device.

In a possible implementation, a structure of the communication apparatus provided in embodiments of this application is shown in FIG. 4, and the communication apparatus includes a processing unit 402. Optionally, the communication apparatus further includes an interface unit 401. The following describes functions of various units in the communication apparatus 400.

The interface unit 401 is configured to input and/or output information. Inputting information may be replaced with receiving information, and outputting information may be replaced with sending information. When outputting the information, the interface unit 401 may output the information to an apparatus other than the communication apparatus 400, or may output the information to another unit in the communication apparatus 400. In some manners, the interface unit 401 may be implemented by using at least one of a physical interface, a communication module, a communication interface, and an input/output interface. In some other manners, the interface unit 401 may be implemented by using an interface circuit, for example, a mobile communication module. The mobile communication module may include one or more of at least one antenna, at least one filter, a switch, a power amplifier, a low noise amplifier (low noise amplifier, LNA), and the like.

The processing unit 402 may be configured to support the communication apparatus 400 in performing processing actions in the foregoing method embodiments. The processing unit 402 may be implemented by using one or more processors. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

In an implementation, the communication apparatus 400 is used in the first apparatus in embodiments of this application shown in FIG. 3. The following describes a specific function of the processing unit 402 in this implementation.

The processing unit 402 is configured to: receive first indication information through the interface unit 401, where the first indication information indicates to activate a first functional module; receive first information through the interface unit 401, where the first information is used to determine that a to-be-activated target AI model includes N AI models, each of the N AI models is used to implement a function of the first functional module, and N is a positive integer; and activate the N AI models based on the first information.

In some possible manners, the processing unit 402 is further configured to determine an available resource of the communication apparatus 400, where the available resource and the first information are used to determine that the target AI model includes the N AI models, and the communication apparatus 400 is an apparatus that activates the N AI models.

In some other possible manners, the processing unit 402 is further configured to determine second information, where the second information and the first information are used to determine that the target AI model includes the N AI models. The second information indicates at least one of the following of M AI models: reliability, accuracy, complexity, power consumption, a type of input information, a size of input information, a type of output information, or a size of output information, where M is a positive integer greater than or equal to N, and the M AI models are AI models that are included in the communication apparatus 400 and that are capable of implementing the function of the first functional module.

In some examples, the processing unit 402 is further configured to send a first output result through the interface unit 401, where the first output result is an output result of a subset of the N AI models, the subset of the AI models is an AI model that satisfies a first condition among the N AI models, and N is greater than or equal to 2.

In some other examples, the processing unit 402 is further configured to send a second output result through the interface unit 401, where the second output result is related to output results of the N AI models, and N is greater than or equal to 2.

In another implementation, the communication apparatus 400 is used in the second apparatus in embodiments of this application shown in FIG. 3. The following describes a specific function of the processing unit 402 in this implementation.

The processing unit 402 is configured to: send first indication information through the interface unit 401, where the first indication information indicates to activate a first functional module; and send first information through the interface unit 401, where the first information is used to determine that a to-be-activated target artificial intelligence AI model includes N AI models, the first information is used to activate the N AI models, each of the N AI models is used to implement a function of the first functional module, and N is a positive integer.

In some possible manners, the processing unit 402 is further configured to receive a first output result through the interface unit 401, where the first output result is an output result of a subset of the N AI models, the subset of the AI models is an AI model that satisfies a first condition among the N AI models, and N is greater than or equal to 2.

In some other possible manners, the processing unit 402 is further configured to receive a second output result through the interface unit 401, where the second output result is related to output results of the N AI models, and N is greater than or equal to 2.

For more detailed descriptions of the processing unit 402 and the interface unit 401, refer to related descriptions in the method embodiments shown in FIG. 3. Details are not described herein again.

It should be noted that, in the foregoing embodiments of this application, division into the modules is an example, is merely logical function division, and may be other division during actual implementation. In addition, functional units in embodiments of this application may be integrated into one processing unit, may exist alone physically, or two or more units may be integrated into one unit. The integrated unit may be implemented in a form of hardware, or may be implemented in a form of a software functional unit.

When the foregoing integrated unit is implemented in the form of the software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium, and includes several instructions for instructing a computer device (which may be a personal computer, a server, or a network device) or a processor (processor) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

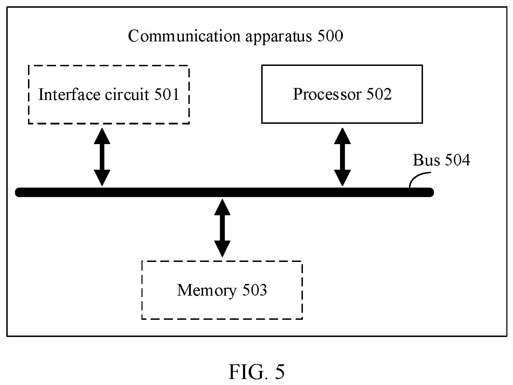

In a possible implementation, for a communication apparatus provided in an embodiment of this application, refer to FIG. 5. The communication apparatus 500 includes a processor 502. Optionally, the communication apparatus 500 further includes an interface circuit 501 and a memory 503. The interface circuit 501, the processor 502, and the memory 503 are coupled to each other.

Optionally, the interface circuit 501, the processor 502, and the memory 503 are coupled to each other through a bus 504. The bus 504 may be a peripheral component interconnect (peripheral component interconnect, PCI) bus, an extended industry standard architecture (extended industry standard architecture, EISA) bus, or the like. The bus may be classified as an address bus, a data bus, a control bus, and the like. For ease of representation, only one thick line is used to represent the bus in FIG. 5, but this does not mean that there is only one bus or only one type of bus.

The interface circuit 501 is configured to input and/or output information. Inputting information may be replaced with receiving information, and outputting information may be replaced with sending information. When outputting the information, the interface circuit 501 may output the information to an apparatus other than the communication apparatus 500, or may output the information to another unit in the communication apparatus 500. For example, the interface circuit 501 may be implemented through at least one of a physical interface, a communication module, a communication interface, an input/output interface, and a mobile communication module. The mobile communication module may include one or more of at least one antenna, at least one filter, a switch, a power amplifier, an LNA, and the like.

The processor 502 may be configured to support the communication apparatus 500 in performing processing actions in the foregoing method embodiments. When the communication apparatus 500 is configured to implement the foregoing method embodiments, the processor 502 may be further configured to implement a function of the foregoing processing unit 402. The processor 502 may be a CPU, or may be another general-purpose processor, a DSP, an ASIC, an FPGA or another programmable logic device, a transistor logic device, a hardware component, or any combination thereof. The general-purpose processor may be a microprocessor or any conventional processor.

In an implementation, the communication apparatus 500 is used in the first apparatus in embodiments of this application shown in FIG. 3. The following describes a specific function of the processor 502 in this implementation.

The processor 502 is configured to: receive first indication information through the interface circuit 501, where the first indication information indicates to activate a first functional module; receive first information through the interface circuit 501, where the first information is used to determine that a to-be-activated target AI model includes N AI models, each of the N AI models is used to implement a function of the first functional module, and N is a positive integer; and activate the N AI models based on the first information.

In another implementation, the communication apparatus 500 is used in the second apparatus in embodiments of this application shown in FIG. 3. The following describes a specific function of the processor 502 in this implementation.

The processor 502 is configured to: send first indication information through the interface circuit 501, where the first indication information indicates to activate a first functional module; and send first information through the interface circuit 501, where the first information is used to determine that a to-be-activated target artificial intelligence AI model includes N AI models, the first information is used to activate the N AI models, each of the N AI models is used to implement a function of the first functional module, and N is a positive integer.

For the specific function of the processor 502, refer to the descriptions in the communication method provided in the foregoing embodiments of this application and the instances, and the descriptions of the specific functions of the communication apparatus 400 in embodiments of this application shown in FIG. 4. Details are not described herein again.

The memory 503 is configured to store program instructions, data, and/or the like. Specifically, the program instructions may include program code, and the program code includes computer operation instructions. The memory 503 may include a RAM, and may further include a non-volatile memory (non-volatile memory), for example, at least one magnetic disk memory. The processor 502 executes the program instructions stored in the memory 503, and uses the data stored in the memory 503, to implement the foregoing function, so as to implement the communication method provided in the foregoing embodiments of this application. The memory 503 may be integrated with the processor 502, or may be a memory outside the communication apparatus.

It may be understood that the memory 503 in FIG. 5 of this application may be a volatile memory or a non-volatile memory, or may include a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and serves as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and method described in this specification includes but is not limited to these memories and any memory of another appropriate type.

Based on the foregoing embodiments, an embodiment of this application further provides a computer program product including computer-executable instructions. When the computer program product is run, the method provided in the foregoing embodiments is caused to be performed.

Based on the foregoing embodiments, an embodiment of this application further provides a computer-readable storage medium. The computer-readable storage medium stores a computer program. When the computer program is executed by a computer, the computer is caused to perform the method provided in the foregoing embodiments.

The storage medium may be any usable medium that can be accessed by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer.

Based on the foregoing embodiments, an embodiment of this application further provides a chip. The chip is configured to read a computer program stored in a memory, to implement the method provided in the foregoing embodiments.

Based on the foregoing embodiments, an embodiment of this application provides a chip system. The chip system includes a processor, configured to support a computer apparatus in implementing functions related to the devices in the foregoing embodiments. In a possible design, the chip system further includes a memory, and the memory is configured to store a program and data that are necessary for the computer apparatus. The chip system may include a chip, or may include a chip and another discrete component.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that instructions executed by the computer or the processor of the another programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more processes in the flowcharts and/or in one or more blocks in the block diagrams.

In this application, "at least one" means one or more, and "a plurality of" means two or more. The term "and/or" describes an association relationship between associated objects, and indicates that three relationships may exist. For example, A and/or B may indicate the following three cases: A exists alone, both A and B exist, and B exists alone, where A and B may be singular or plural. In text descriptions of this application, the character "/" usually indicates an "or" relationship between associated objects.

It may be understood that various numbers in embodiments of this application are merely used for differentiation for ease of description, and are not used to limit the scope of embodiments of this application. The sequence numbers of the foregoing processes do not mean an execution sequence, and the execution sequence of the processes should be determined based on functions and internal logic of the processes.

It is clearly that, a person skilled in the art can make various modifications and variations to this application without departing from the scope of this application. In this way, this application is intended to cover these modifications and variations of this application provided that they fall within the scope of protection defined by the following claims and their equivalent technologies.

## Claims

1. A communication method, comprising:
receiving first indication information, wherein the first indication information indicates to activate a first functional module;
receiving first information, wherein the first information is used to determine that a to-be-activated target artificial intelligence AI model comprises N AI models, each of the N AI models is used to implement a function of the first functional module, and N is a positive integer; and
activating the N AI models based on the first information.

2. The method according to claim 1, wherein the first information indicates at least one of the following:
an input parameter of the target AI model;
an output parameter of the target AI model;
a version number corresponding to the target AI model;
a format of the target AI model;
a requirement of the target AI model on a terminal capability;
a device vendor of a device to which the target AI model is applicable;
an application scenario of the target AI model;
a requirement on computational complexity of the target AI model;
a requirement on a processing capability of the target AI model;
a requirement on performance of the target AI model;
a range of a size of the target AI model; or
whether combining output results of a plurality of target AI models is allowed.

3. The method according to claim 1 or 2, further comprising:
determining an available resource of the first apparatus, wherein the available resource and the first information are used to determine that the target AI model comprises the N AI models, and the first apparatus is an apparatus that activates the N AI models.

4. The method according to claim 3, wherein the available resource comprises at least one of the following:
an available computing capability of the first apparatus;
available power of the first apparatus; or
available storage space of the first apparatus.

5. The method according to any one of claims 1 to 4, further comprising:
determining second information, wherein the second information and the first information are used to determine that the target AI model comprises the N AI models, and the second information indicates at least one of the following of M AI models:
reliability, accuracy, complexity, power consumption, a type of input information, a size of input information, a type of output information, or a size of output information, wherein
M is a positive integer greater than or equal to N, the M AI models are AI models that are comprised in the first apparatus and that are capable of implementing the function of the first functional module, and the first apparatus is an apparatus that activates the N AI models.

6. The method according to any one of claims 1 to 5, wherein the method further comprises:
sending a first output result, wherein the first output result is an output result of a subset of the N AI models, the subset of the AI models is an AI model that satisfies a first condition among the N AI models, and N is greater than or equal to 2.

7. The method according to claim 6, wherein the first condition comprises at least one of the following:
the subset of the AI models is an AI model with highest reliability among the N AI models;
the subset of the AI models is an AI model with highest accuracy among the N AI models; or
the subset of the AI models is an AI model whose output result is most similar to a previous measurement result of the first apparatus among the N AI models.

8. The method according to any one of claims 1 to 5, wherein the method further comprises:
sending a second output result, wherein the second output result is related to output results of the N AI models, and N is greater than or equal to 2.

9. The method according to claim 8, wherein the second output result is a weighted sum of the output results of the N AI models.

10. A communication method, comprising:
sending first indication information, wherein the first indication information indicates to activate a first functional module; and
sending first information, wherein the first information is used to determine that a to-be-activated target artificial intelligence AI model comprises N AI models, the first information is used to activate the N AI models, each of the N AI models is used to implement a function of the first functional module, and N is a positive integer.

11. The method according to claim 10, wherein the first information indicates at least one of the following:
an input parameter of the target AI model;
an output parameter of the target AI model;
a version number corresponding to the target AI model;
a format of the target AI model;
a requirement of the target AI model on a terminal capability;
a device vendor of a device to which the target AI model is applicable;
an application scenario of the target AI model;
a requirement on computational complexity of the target AI model;
a requirement on a processing capability of the target AI model;
a requirement on performance of the target AI model;
a range of a size of the target AI model; or
whether combining output results of a plurality of target AI models is allowed.

12. The method according to claim 10 or 11, wherein the method further comprises:
receiving a first output result, wherein the first output result is an output result of a subset of the N AI models, the subset of the AI models is an AI model that satisfies a first condition among the N AI models, and N is greater than or equal to 2.

13. The method according to claim 12, wherein the first condition comprises at least one of the following:
the subset of the AI models is an AI model with highest reliability among the N AI models;
the subset of the AI models is an AI model with highest accuracy among the N AI models; or
the subset of the AI models is an AI model whose output result is most similar to a previous measurement result of the first apparatus among the N AI models.

14. The method according to claim 10 or 11, wherein the method further comprises:
receiving a second output result, wherein the second output result is related to output results of the N AI models, and N is greater than or equal to 2.

15. The method according to claim 14, wherein the second output result is a weighted sum of the output results of the N AI models.

16. A communication apparatus, comprising a unit configured to perform the method according to any one of claims 1 to 9, or comprising a unit for performing the method according to any one of claims 10 to 15.

17. A communication apparatus, comprising a processor, wherein the processor executes instructions, to cause the apparatus to perform the method according to any one of claims 1 to 9, or to cause the apparatus to perform the method according to any one of claims 10 to 15.

18. A computer-readable storage medium, wherein the computer-readable storage medium stores a computer program or instructions, and when the computer program or the instructions are executed, the method according to any one of claims 1 to 15 is implemented.

19. A computer program product, wherein the computer program product comprises computer program code, and when the computer program code is run, the method according to any one of claims 1 to 15 is implemented.

20. A communication system, comprising:
a first apparatus, configured to implement the method according to any one of claims 1 to 9; and
a second apparatus, configured to implement the method according to any one of claims 10 to 15.
